# EUROPÄISCHE PATENTSCHRIFT

(11) **EP 2 631 848 B1**
(45) Veröffentlichungstag und Bekanntmachung des Hinweises auf die Patenterteilung: **03.08.2016**
(21) Anmeldenummer: 13156277.9
(22) Anmeldetag: 22.02.2013
(51) Int. Cl.: G06K 19/07, G06K 19/077, G06K 7/10

(54) **Transponderanordnung, Sende- und Empfangsvorrichtung und Verfahren zum Betrieb einer Sende- und Empfangsvorrichtung**
Transponder assembly, transmitting and receiving apparatus and method for operating a transmission device and reception device
Agencement de transpondeur, dispositif d'émission et de réception et procédé de fonctionnement d'un dispositif d'émission et de réception

(30) Priorität: 23.02.2012 DE 102012202788
(43) Veröffentlichungstag der Anmeldung: 28.08.2013
(73) Patentinhaber: micro-sensys GmbH, 99098 Erfurt (DE)
(72) Erfinder: Jurisch, Reinhard, 99438 Meckfeld bei Bad Berka (DE); Peitsch, Peter, 99099 Erfurt (DE); De Valk, Pieter C. M., 5364 Escharen (NL)
(74) Vertreter: Liedtke, Klaus

(56) Entgegenhaltungen:
- EP-A1- 1 605 391
- EP-A2- 1 647 917
- DE-A1-102009 051 313

## Beschreibung

Die Erfindung betrifft eine Transponderanordnung nach den Merkmalen des Oberbegriffs des Anspruchs 1, eine Sende- und Empfangsvorrichtung nach den Merkmalen des Oberbegriffs des Anspruchs 5 und ein Verfahren zum Betrieb einer Sende- und Empfangsvorrichtung nach den Merkmalen des Oberbegriffs des Anspruchs 6.

Aus dem Stand der Technik ist es allgemein bekannt, RFID-Transponder an Gegenständen anzuordnen, um die Gegenstände durch Auslesen ihres jeweiligen RFID-Transponders mittels eines RFID-Lesegerätes eindeutig identifizieren zu können.

In der DE 10 2009 051 313 A1 werden ein Zuordnungssystem und ein Verfahren zum Betreiben eines Zuordnungssystems beschrieben. Das Zuordnungssystem dient der Verknüpfung von vorrichtungsbezogenen Ortsinformationen einer Vorrichtung, die mit austauschbaren Komponenten bestückbar ist, mit Komponenteninformationen austauschbarer Komponenten, die zur Anordnung an der Vorrichtung ausgebildet sind. Das Zuordnungssystem umfasst eine Sende-Empfangseinrichtung, Informationsträger sowie eine Auswerteeinrichtung zur Verarbeitung und/oder Speicherung der von der Sende-Empfangseinrichtung empfangenen Antwortsignale. Auf einem ortsfesten Informationsträger sind vorrichtungsbezogene Ortsinformationen codiert und auf einem mobilen Informationsträger, der der austauschbaren Komponente zugeordnet ist, sind Komponenteninformationen codiert. Die Sende-Empfangseinrichtung ist dazu ausgebildet, das Vorliegen einer vorgebbaren Zuordnung zwischen den Ortsinformationen und den Komponenteninformationen zu überprüfen. Anspruch 1 ist gegenüber die um Dokument angegrenzt.

Aus der EP 1 647 917 A2 ist ein RFID-System mit einem ersten RFID-Reader mit einer alten Readerprogrammierung, mit einer Mehrzahl von RFID-Administratortranspondern und mit einer neuen Readerprogrammierung, welche in eine Vielzahl von Segmenten unterteilt ist, bekannt. Jeder Administratortransponder hat einen Speicher zur Speicherung eines neuen Revisionsidentifikators für die neue Programmierung, eines Segments der neuen Programmierung und eines zugehörigen Programmidentifikators. Das RFID-System umfasst zudem erste, zweite und dritte Schreibmittel. Das erste Schreibmittel schreibt die in den Administratortranspondern gespeicherten Programmsegmente auf den ersten RFID-Reader, so dass dieser sich selbst neu programmieren kann. Das zweite Schreibmittel schreibt eines der Segmente vom ersten RFID-Reader auf einen Nutzertransponder. Das dritte Schreibmittel schreibt dieses Segment auf einen oder mehrere weitere RFID-Reader, so dass auch diese sich selbst neu programmieren können.

In der EP 1 605 391 A1 wird ein Antennenarray für einen RFID-Reader beschrieben. Das Antennenarray umfasst eine erste Antenne für eine erste Frequenz und eine zweite Antenne für eine von der ersten Frequenz verschiedene zweite Frequenz. Die Antennen sind sich überlappend angeordnet.

Der Erfindung liegt die Aufgabe zu Grunde, eine verbesserte Transponderanordnung, eine verbesserte Sende- und Empfangsvorrichtung und ein verbessertes Verfahren zum Betrieb einer Sende- und Empfangsvorrichtung anzugeben.

Die Aufgabe wird erfindungsgemäß gelöst durch eine Transponderanordnung mit den Merkmalen des Anspruchs 1, eine Sende- und Empfangsvorrichtung mit den Merkmalen des Anspruchs 5 und ein Verfahren zum Betrieb einer Sende- und Empfangsvorrichtung mit den Merkmalen des Anspruchs 6.

Vorteilhafte Ausgestaltungen der Erfindung sind Gegenstand der Unteransprüche.

Eine erfindungsgemäße Transponderanordnung umfasst zumindest einen ersten Transponder mit einer ersten Transponderantenne und einen zweiten Transponder mit einer zweiten Transponderantenne, wobei der erste Transponder an einem ersten Objekt stoffschlüssig, formschlüssig und/oder kraftschlüssig befestigt ist und wobei der zweite Transponder am ersten Objekt derart nahe zum ersten Transponder angeordnet ist, dass eine drahtlose Kommunikationsverbindung von einem Lesegerät zu beiden Transpondern ohne eine Positionsänderung des Lesegerätes möglich ist. Die beiden Transponder bzw. die Transponderantennen der Transponder sind derart ausgebildet und angeordnet, dass sich beide möglichst wenig negativ beeinflussen, d. h. dass zum Beispiel keine wesentlichen Resonanzverschiebungen auftreten. Zu diesem Zweck sind die Transponderantennen der beiden Transponder koaxial zueinander ausgerichtet, d. h. sie sind beispielsweise übereinander angeordnet und derart positioniert, dass sie eine gemeinsame Mittelachse aufweisen und die eine Transponderantenne wesentlich weiter von dieser Mittelachse entfernt ist als die andere Transponderantenne, so dass, wenn die beiden Transponderantennen in einer Ebene liegen würden, sie koaxial zueinander angeordnet wären, sich die eine Transponderantenne also innerhalb der anderen Transponderantenne befinden würde. Es sind dabei eine Vielzahl von Ausformungen der Transponderantennen möglich, beispielsweise können Antennendrähte oder Antennenleiterbahnen in einer Windung im Wesentlichen rund oder in mehreren Windungen im Wesentlichen spiralförmig verlaufen oder auch im Wesentlichen vier- oder mehreckig. Dabei können die Transponderantennen der beiden Transponder ähnlich oder voneinander abweichend ausgebildet sein.

Die beiden Transponder sind derart nahe zueinander angeordnet, dass sie sich zeitgleich in einem Sende- und Empfangsbereich des zu einer drahtlosen Kommunikation mit den beiden Transpondern positionierten Lesegerätes befinden. Dazu sind die beiden Transponderantennen beispielsweise ineinander angeordnet, d. h. die eine Transponderantenne ist von der anderen Transponderantenne umgeben, oder die beiden Transponderantennen sind derart nahe zueinander angeordnet, dass sie sich zumindest bereichsweise überlappen. Auch eine Anordnung der beiden Transponderantennen unmittelbar nebeneinander ist möglich. Die koaxiale Anordnung der beiden Transponderantennen, d. h. die beschriebene Anordnung der Transponderantennen ineinander, oder die teilweise Überlappung der Transponderantennen sind jedoch zu bevorzugen, da dadurch mittels des Lesegerätes in einem größeren Bereich eine zeitgleiche Kommunikation mit beiden Transpondern ermöglicht ist.
Auf diese Weise ist es möglich, eine Manipulation der Transponder oder von Objekten, an welchen die Transponder angeordnet sind, zu erkennen, wenn die beiden zusammengehörigen Transponder mittels des Lesegerätes nicht ohne dessen Positionsänderung auslesbar sind. Derartige Manipulationen sind bei Bedarf auch zu dokumentieren.

Die beiden Transponder sind durch diese Anordnung zeitgleich oder zumindest quasi-zeitgleich, d. h. beispielsweise unmittelbar nacheinander oder in einem mehrfachen schnellen Wechsel auszulesen und/oder zu beschreiben, d. h. es sind Daten von den Transpondern an das Lesegerät und/oder vom Lesegerät an zumindest einen der Transponder zu übertragen. Gegenüber aus dem Stand der Technik bekannten Lösungen, in welchen mehrere Transponder nacheinander getrennt ausgelesen und/oder beschrieben werden, stellt die erfindungsgemäße Lösung eine erhebliche Vereinfachung für einen Anwender dar, da Bedienfehler vermieden oder zumindest deutlich reduziert sind und eine Zeitdauer für das Auslesen und/oder Beschreiben der beiden Transponder wesentlich verkürzt ist.

Zweckmäßigerweise sind die Transponder als RFID-Transponder ausgebildet. Der Begriff RFID steht dabei für "radio-frequency identification" und bezeichnet ein auf elektromagnetischen Wellen basierendes drahtloses Datenübertragungsverfahren, d. h. ein funkbasiertes Datenübertragungsverfahren, für welches ein RFID-Transponder und ein RFID-Lesegerät, auch als RFID-Reader bezeichnet, erforderlich ist. Der RFID-Transponder wird dabei durch an ihn vom RFID-Lesegerät übermittelte Funksignale angesprochen. Er antwortet üblicherweise durch Übertragung eines eindeutigen Identifikationscodes und gegebenenfalls weiterer Informationen. Über den eindeutigen Identifikationscode ist das Objekt, an welchem der jeweilige Transponder befestigt ist, eindeutig identifizierbar und die weiteren vom RFID-Transponder übertragenen Informationen sind dem jeweiligen Objekt eindeutig zuzuordnen. Die Übertragung des eindeutigen Identifikationscodes ist jedoch nicht zwingend erforderlich. Es ist auch möglich, dass der RFID-Transponder ausschließlich die anderen Informationen an das RFID-Lesegerät überträgt.

Die erfindungsgemäße Lösung ist dabei für alle üblichen RFID-Übertragungsfrequenzen verwendbar, d. h. für LF (Low Frequency), HF (High Frequency) und UHF (Ultra-High-Frequency). Auch eine Kombination von zwei dieser Frequenzbänder wäre technisch möglich, d. h. einer der Transponder operiert in einem der Frequenzbänder und der andere in einem anderen der Frequenzbänder.

Um die gegenseitige Beeinflussung der beiden Transponderantennen möglichst weit zu reduzieren, ist erfindungsgemäß eine der Transponderantennen 1,5-fach bis 10-fach größer als die andere Transponderantenne, d. h. flächige Ausdehnungen, Durchmesser und/oder Längs- und Quererstreckungen weichen um das 1,5-fache bis 10-fache voneinander ab. Auf diese Weise ist ein Koppelfaktor zwischen den beiden Transpondern deutlich reduziert. Die beiden Transponderantennen können jeweils beispielsweise eine Größe von 5 mm bis 100 mm aufweisen. Dabei bezieht sich die Größe beispielsweise auf einem Außendurchmesser oder auf eine Kantenlänge.

Zweckmäßigerweise ist der zweite Transponder an einem zweiten Objekt stoffschlüssig, formschlüssig und/oder kraftschlüssig befestigt, welches am ersten Objekt angeordnet ist. Das erste Objekt ist beispielsweise ein Schildträger und das zweite Objekt ist ein Schild, d. h. ein bewegliches Objekt, welches in diesem Schildträger positioniert ist und diesem Schildträger zugeordnet ist. Nur wenn das Schild im Schildträger ordnungsgemäß positioniert ist, befinden sich die beiden Transponder in der beschriebenen Position zueinander. Dabei ist der am Schild befestigte zweite Transponder beispielsweise nur dann auszulesen und/oder zu beschreiben, wenn er sich im Bereich des dem Schild zugeordneten Schildträgers mit dem ersten Transponder befindet. Zweckmäßigerweise ist ein Zustand einer falschen Anordnung von Schild und Schildträger zu erkennen optional auch zu dokumentieren, um auf diese Weise mögliche Manipulationen oder falsche Zuordnungen von Schild und Schildträger zu ermitteln.

In einer vorteilhaften Ausführungsform umfasst zumindest einer der Transponder zumindest eine Sensoreinheit und/oder ist mit zumindest einer Sensoreinheit gekoppelt. D. h. der Transponder ist beispielsweise als ein so genannter Sensortransponder ausgebildet. Dabei kann der Transponder ein passiver, ein semiaktiver oder ein aktiver Transponder sein. Bei einem passiven Transponder erfolgt eine Energieversorgung sowohl des Transponders als auch der Sensoreinheit über das Lesegerät, durch welches elektrische Energie im Transponder induzierbar ist. Diese ist optional beispielsweise in einem Kondensator oder Akkumulator speicherbar. Bei einem semiaktiven Transponder weist die Sensoreinheit eine eigene Energieversorgung für ihre Funktionen zum Beispiel in Form einer Batterie auf. Die Transpondereinheit selbst, d. h. ein Transponderinterface des Sensortransponders ist passiv, d. h. für ihre Funktion auf die beschriebene Weise vom Lesegerät mit Energie zu versorgen, welche beispielsweise auch zeitweilig in einem Kondensator oder Akkumulator speicherbar ist. Bei einem aktiven Transponder weist der Sensortransponder zumindest eine eigene Energiequelle auf, üblicherweise in Form einer Batterie. Über diese sind sowohl die Funktionen der Sensoreinheit als auch des Transponderinterfaces des Sensortransponders mit elektrischer Energie zu versorgen.

Bei dieser Ausführungsform ist das erste Objekt beispielsweise ein Messobjekt der Sensoreinheit, welche mittels des ersten, fest montierten Transponders eindeutig gekennzeichnet ist. Der als Sensortransponder ausgebildete zweite Transponder ist zur Erfassung von Messwerten entsprechend der oben beschriebenen Anordnung in der Nähe des ersten Transponders am Messobjekt positioniert, beispielsweise in einer entsprechenden Halterung, welche als zweites Objekt ausgebildet ist. Sensordaten sind dann nur auszulesen, wenn sich der zweite Transponder, d. h. der Sensortransponder, an der richtigen Position in unmittelbarer Nähe zum ersten Transponder befindet. Damit ist eine Manipulation verhindert oder zumindest deutlich erschwert.

Eine erfindungsgemäße Sende- und Empfangsvorrichtung umfasst zumindest eine oben beschriebene Transponderanordnung und zumindest ein Lesegerät für eine drahtlose Kommunikation zwischen der Transponderanordnung und dem Lesegerät. Sind die beiden Transponder als RFID-Transponder ausgebildet, so ist das Lesegerät entsprechend als ein RFID-Lesegerät ausgebildet. Mit der erfindungsgemäßen Sende- und Empfangsvorrichtung sind die oben bereits geschilderten Vorteile zu erzielen.

In einer vorteilhaften Ausführungsform der Sende- und Empfangsvorrichtung sind die Transponder und das Lesegerät aufeinander abgestimmt, so dass eine gute Kopplung zu den beiden Transpondern ermöglicht ist, jedoch möglichst keine Kopplung zu weiteren sich zufällig in der Umgebung befindenden Transpondern erfolgt. Dazu ist beispielsweise eine Lesegerätantenne des Lesegerätes entsprechend ausgestaltet. Zumindest eine der Transponderantennen, die größere oder die kleinere Transponderantenne, und die Lesegerätantenne des Lesegerätes weisen dazu vorzugsweise in etwa die gleiche laterale Ausdehnung auf, d. h. die gleiche flächige Ausdehnungen, den gleichen Durchmesser und/oder die gleichen Längs- und Quererstreckungen, je nach geometrischer Ausformung der Antennen. Diese laterale Ausdehnung liegt bevorzugt in der Größenordnung eines maximalen Leseabstandes. Die Lesegerätantenne ist beispielsweise als eine Planarantenne ausgeführt und erstreckt sich während einer Kommunikation zwischen dem Lesegerät und den Transpondern in einem gewissen Abstand, d, h. dem Leseabstand, in etwa koaxial zu den beiden Transponderantennen, wobei die Lesegerätantenne in etwa parallel zu den Transponderantennen liegt. Bei zwei sich überlappenden Transponderantennen sollte sich die Lesegerätantenne in etwa über dem Bereich der Überlappung befinden und in etwa parallel zu den Transponderantennen ausgerichtet sein, um die Kommunikation zwischen dem Lesegerät und den beiden Transpondern zu ermöglichen.

Zweckmäßigerweise umfasst das Lesegerät eine Auswerteeinheit und/oder ist mit einer Auswerteeinheit gekoppelt, beispielsweise über eine entsprechende drahtgebundene oder drahtlose Datenschnittstelle. Auf diese Weise sind von den Transpondern übertragen Daten in der Auswerteeinheit auszuwerten. Bei einem Sensortransponder ist dieser zudem über durch an ihn übertragene Vorgaben von der Auswerteeinheit steuerbar und oder regelbar.

In einem Verfahren zum Betrieb einer oben beschriebenen Sende- und Empfangsvorrichtung wird ein Lesegerät in eine Position bewegt, in welcher eine drahtlose Kommunikationsverbindung zwischen dem Lesegerät und zumindest zwei Transpondern der Sende- und Empfangsvorrichtung möglich ist und eine drahtlose Kommunikation zwischen dem Lesegerät und den beiden Transpondern wird durchgeführt Mittels des Verfahrens sind die oben bereits geschilderten Vorteile zu erzielen.

In einer vorteilhaften Ausführungsform wird eine Fehlermeldung generiert, wenn die drahtlose Kommunikation zwischen dem Lesegerät und zumindest einem der beiden Transponder nicht möglich ist und/oder wenn falsche Daten von zumindest einem der Transponder an das Lesegerät übertragen werden. Auf diese Weise ist es möglich, eine Manipulation der Transponder oder vom Objekt oder von Objekten an welchem/an welchen der/die Transponder angeordnet ist/sind, zu erkennen, wenn die beiden zusammengehörigen Transponder mittels des Lesegerätes nicht ohne dessen Positionsänderung auslesbar sind oder wenn falsche Daten an das Lesegerät gesendet werden. Derartige Manipulationen sind bei Bedarf auch zu dokumentieren.

Zweckmäßigerweise wird die drahtlose Kommunikation zwischen dem Lesegerät und den beiden Transpondern mittels eines Antikollisionsverfahrens durchgeführt. Es sind eine Vielzahl derartiger Antikollisionsverfahren in Verbindung mit Datenkommunikation, insbesondere in Verbindung mit Datenkommunikation zwischen RFID-Geräten allgemein bekannt. Dies ermöglicht es, die beiden Transponder zeitgleich oder zumindest quasi-zeitgleich, d. h. in einem mehrfachen schnellen Wechsel auszulesen und/oder zu beschreiben, d. h. es sind Daten von den Transpondern an das Lesegerät und/oder vom Lesegerät an zumindest einen der Transponder zu übertragen. Dabei wird durch die Verwendung des Antikollisionsverfahrens eine Störung der Kommunikation des einen Transponders mit dem Lesegerät durch den jeweils anderen Transponder verhindert. Da die beiden Transponder auf diese Weise nicht nacheinander ausgelesen und/oder beschrieben werden müssen und keine Positionsänderung des Lesegeräts zum Auslesen und/oder Beschreiben der Transponder erforderlich ist, ist eine erhebliche Vereinfachung für den Anwender erreicht. Bedienfehler werden vermieden oder zumindest deutlich reduziert und eine Zeitdauer für das Auslesen und/oder Beschreiben der beiden Transponder ist wesentlich verkürzt.

Vorzugsweise wird von zumindest einem der beiden Transponder ein eindeutiger Identifikationscode an das Lesegerät übertragen. Dies ist, wenn es sich um RFID-Transponder handelt, eine übliche und bekannte Methode. Bei diesen RFID-Transpondern wird dieser Identifikationscode als UID (Unique Identifier) bezeichnet. Über den eindeutigen Identifikationscode ist das Objekt, an welchem der jeweilige Transponder befestigt ist, eindeutig identifizierbar und weitere vom Transponder übertragene Informationen sind dem jeweiligen Objekt eindeutig zuzuordnen. Zudem wird auf diese Weise die Anwesenheit beider Transponder an der jeweiligen Position durch die Übertragung von deren Identifikationscodes an das Lesegerät festgestellt. Da die drahtlose Kommunikation zwischen dem Lesegerät und den Transpondern wesentlich schneller erfolgt als eine manuelle Bewegung des Lesegerätes durch den Anwender, kann durch eine schnelle wechselseitige Kommunikation des Lesegerätes mit beiden Transpondern sichergestellt werden, dass sich beide Transponder während des gesamten Lese- und/oder Schreibprozesses immer in unmittelbarer Nähe zueinander befanden. Eine Manipulation ist dadurch unmöglich, da sie vom Lesegerät sofort erkannt wird. Ist dies der Fall, wird vorzugsweise eine entsprechende Fehlermeldung generiert, um den Anwender zu informieren.

Vorteilhafterweise kann zumindest einer der Transponder nur ausgelesen und/oder beschrieben werden, wenn vom Lesegerät ein Zugangscode, beispielsweise ein Schlüssel oder Passwort, an diesen Transponder übertragen wird, welcher in dem anderen Transponder gespeichert ist, d. h. es wird eine Authentifizierung zwischen den Transpondern und dem Lesegerät durchgeführt. Es muss hierfür vom Lesegerät zunächst der Transponder ausgelesen werden, um den Zugangscode zu erhalten und diesen dann an den anderen Transponder zu übermitteln, so dass dieser vom Lesegerät ausgelesen und/oder beschrieben werden kann. Daneben sind auch andere Kombinationen der jeweils wechselseitigen Speicherung von Zugangscodes für die Transponder und/oder das Lesegerät im Lesegerät bzw. dem jeweils anderen Transponder möglich. Dies ist eine sehr effiziente Methode, um ein unbefugtes Auslesen von Informationen des Transponders und/oder ein unbefugtes Übertragen von Informationen an den Transponder zu vermeiden. Zudem wird auf diese Weise sichergestellt, dass stets der richtige, an die jeweilige Transponderposition gehörende Transponder ausgelesen und/oder beschrieben wird. Liegt eine Manipulation an einem der Transponder vor, d. h. ist dieser beispielsweise gegen einen anderen ausgetauscht, so liegt entweder der Zugangscode nicht vor oder der ausgelesene passt nicht zu dem auszulesenden und/oder zu beschreibenden Transponder.

In einer vorteilhaften Ausführungsform werden von zumindest einem der Transponder, welcher zumindest eine Sensoreinheit umfasst und/oder mit zumindest einer Sensoreinheit gekoppelt ist, Sensordaten der zumindest einen Sensoreinheit an das Lesegerät übertragen. Der Transponder kann, wie bereits beschrieben ein passiver, ein semiaktiver oder ein aktiver Transponder sein. Das erste Objekt ist in diesem Fall beispielsweise ein Messobjekt der Sensoreinheit, welches mittels des ersten, fest montierten Transponders eindeutig gekennzeichnet ist. Der als Sensortransponder ausgebildete zweite Transponder ist zur Erfassung von Messwerten entsprechend der oben beschriebenen Anordnung in der Nähe des ersten Transponders am Messobjekt positioniert, beispielsweise in einer entsprechenden Halterung, welche als zweites Objekt ausgebildet ist. Sensordaten können dann nur ausgelesen werden, wenn sich der zweite Transponder, d. h. der Sensortransponder, an der richtigen Position in unmittelbarer Nähe zum ersten Transponder befindet. Damit wird eine Manipulation verhindert oder zumindest deutlich erschwert.

Ausführungsbeispiele der Erfindung werden im Folgenden anhand einer Zeichnung näher erläutert.

Darin zeigt:

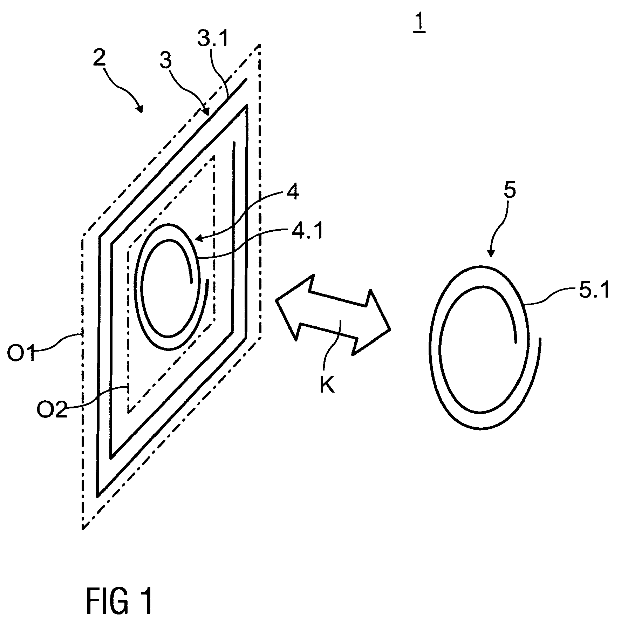

- Figur 1: schematisch eine Sende- und Empfangsvorrichtung.

**Figur 1** zeigt eine schematische Darstellung einer Sende- und Empfangsvorrichtung 1, welche eine Transponderanordnung 2 mit zwei Transpondern 3, 4 und ein Lesegerät 5 für eine drahtlose Kommunikation zwischen der Transponderanordnung 2 und dem Lesegerät 5 umfasst. Die Transponder 3, 4 sind als RFID-Transponder ausgebildet und entsprechend ist das Lesegerät 5 als RFID-Lesegerät ausgebildet. Dadurch ist insbesondere eine berührungslose drahtlose Kommunikation ermöglicht, d. h. eine Funkkommunikation zwischen den Transpondern 3, 4 und dem Lesegerät 5.. Anhand dieser Darstellung wird im Folgenden auch ein Verfahren zum Betrieb der Sende- und Empfangsvorrichtung 1 näher erläutert. Aus Gründen der Übersichtlichkeit sind in dieser stark vereinfachten schematischen Darstellung lediglich Transponderantennen 3.1, 4.1 der beiden Transponder 3, 4 und eine Lesegerätantenne 5.1 des Lesegerätes 5 dargestellt.

Der erste Transponder 3 ist an einem ersten Objekt O1 stoffschlüssig, formschlüssig und/oder kraftschlüssig befestigt. Der zweite Transponder 4 ist an einem zweiten Objekt 02 stoffschlüssig, formschlüssig und/oder kraftschlüssig befestigt, welches am ersten Objekt O1 angeordnet ist. Dabei ist der zweite Transponder 4 bzw. das zweite Objekt 02 mit dem zweiten Transponder 4 am ersten Objekt O1 in unmittelbarer Nähe zum ersten Transponder 3 angeordnet, und zwar derart nahe, dass eine drahtlose Kommunikationsverbindung K vom Lesegerät 5 zu beiden Transpondern 3, 4 ohne eine Positionsänderung des Lesegerätes 5 möglich ist. D. h. die beiden Transponder 3, 4 sind derart nahe zueinander angeordnet, dass sie sich zeitgleich in einem Sende- und Empfangsbereich des zu einer drahtlosen Kommunikation mit den beiden Transpondern 3, 4 positionierten Lesegerätes 5 befinden. Dabei ermöglicht die drahtlose Kommunikationsverbindung K eine bidirektionale Kommunikation.

In dem dargestellten Ausführungsbeispiel ist beispielsweise das erste Objekt O1 als ein Schildträger oder Schildhalter ausgebildet und das zweite Objekt 02 ist als ein Schild ausgebildet, d. h. als ein bewegliches Objekt, welches in diesem Schildträger positioniert ist und diesem Schildträger zugeordnet ist. Nur wenn das Schild im Schildträger ordnungsgemäß positioniert ist, befinden sich die beiden Transponder 3, 4 in der beschriebenen Position zueinander. Dabei ist der am Schild befestigte zweite Transponder 4 beispielsweise nur dann auszulesen und/oder zu beschreiben, wenn er sich im Bereich des dem Schild zugeordneten Schildträgers mit dem ersten Transponder 3 befindet. Zweckmäßigerweise ist ein Zustand einer falschen Anordnung von Schild und Schildträger zu erkennen und optional auch zu dokumentieren, um auf diese Weise mögliche Manipulationen oder falsche Zuordnungen von Schild und Schildträger zu ermitteln.

Um die drahtlose Kommunikationsverbindung K vom Lesegerät 5 zu den beiden Transpondern 3, 4 ohne eine Positionsänderung des Lesegerätes 5 zu ermöglichen, sind die beiden Transponder 3, 4 bzw. die Transponderantennen 3.1, 4.1 der Transponder 3, 4 derart ausgebildet und angeordnet, dass sich beide möglichst wenig negativ beeinflussen, d. h. dass zum Beispiel keine wesentlichen Resonanzverschiebungen auftreten. Zu diesem Zweck sind die Transponderantennen 3.1, 4.1 der beiden Transponder 3, 4 im dargestellten Beispiel koaxial zueinander ausgerichtet, d. h. sie sind übereinander angeordnet und derart positioniert, dass sie eine gemeinsame Mittelachse aufweisen, wobei die erste Transponderantenne 3.1 weiter von dieser Mittelachse entfernt ist als die zweite Transponderantenne 4.1, so dass, wenn die beiden Transponderantennen 3.1, 4.1 in einer Ebene liegen würden, sie koaxial zueinander angeordnet wären, sich die zweite Transponderantenne 4.1 also innerhalb der ersten Transponderantenne 3.1 befinden würde.

Es sind dabei eine Vielzahl von Ausformungen der Transponderantennen 3.1, 4.1 möglich. In diesem Beispiel ist ein Antennendraht oder eine Antennenleiterbahn der ersten Transponderantenne 3.1 im Wesentlichen viereckig in mehreren Windungen verlegt und der Antennendraht oder die Antennenleiterbahn der zweiten Transponderantenne 4.1 ist im Wesentlichen spiralförmig rund in mehreren Windungen verlegt. Es sind natürlich auch anderen Formen und andere Kombinationen von Formen für die Transponderantennen 3.1,4.1 möglich. Zudem können die Transponderantennen 3.1, 4.1 beispielsweise anstatt der hier dargestellten koaxialen Anordnung auch nebeneinander angeordnet sein, wobei sie sich auch bereichsweise überlappen können.

Um die negative Beeinflussung der beiden Transponder 3, 4 weiter zu reduzieren, unterscheiden sich die beiden Transponderantennen 3.1, 4.1 in ihrer Dimension beispielsweise um den Faktor 1,5 bis 10, d. h. im hier dargestellten Beispiel ist die erste Transponderantenne 3.1 um das 1,5-fache bis 10-fache größer als die zweite Transponderantenne 4.1. Diese Größenangaben beziehen sich beispielsweise auf flächige Ausdehnungen, Durchmesser und/oder Längs- und Quererstreckungen, welche um das 1,5-fache bis 10-fache voneinander abweichen. Auf diese Weise ist ein Koppelfaktor zwischen den beiden Transpondern 3, 4 deutlich reduziert.

Durch diese Anordnung der beiden Transponder 3, 4 bzw. von deren Transponderantennen 3.1, 4.1 wird es ermöglicht, die beiden Transponder 3, 4 mittels des Lesegerätes 5 unter Verwendung eines Antikollisionsverfahrens zeitgleich oder zumindest quasi-zeitgleich auszulesen, ohne die Position des Lesegerätes 5 zu verändern. Die Transponder 3, 4 werden dabei in einem mehrfachen schnellen Wechsel ausgelesen und/oder beschrieben, d. h. es werden Daten von den Transpondern 3, 4 an das Lesegerät 5 und/oder vom Lesegerät 5 an zumindest einen der Transponder 3, 4 übertragen. Dabei wird durch die Verwendung des Antikollisionsverfahrens eine Störung der Kommunikation des einen Transponders 3, 4 mit dem Lesegerät 5 durch den jeweils anderen Transponder 3, 4 verhindert. Da die beiden Transponder 3, 4 auf diese Weise nicht nacheinander ausgelesen und/oder beschrieben werden müssen und keine Positionsänderung des Lesegeräts 5 zum Auslesen und/oder Beschreiben der Transponder 3, 4 erforderlich ist, ist eine erhebliche Vereinfachung für einen Anwender oder Bediener erreicht. Bedienfehler werden vermieden oder zumindest deutlich reduziert und eine Zeitdauer für das Auslesen und/oder Beschreiben der beiden Transponder 3, 4 ist wesentlich verkürzt.

Das Lesegerät 5 weist beispielsweise eine hier nicht näher dargestellte Auswerteeinheit auf und/oder ist mit einer Auswerteeinheit gekoppelt, beispielsweise über eine entsprechende drahtgebundene oder drahtlose Datenschnittstelle. Auf diese Weise sind von den Transpondern 3, 4 übertragene Daten in der Auswerteeinheit auszuwerten.

Vorzugsweise wird von den Transpondern 3, 4 ein jeweiliger eindeutiger Identifikationscode an das Lesegerät 5 übertragen. Dies ist bei RFID-Transpondern eine übliche und bekannte Methode. Bei diesen RFID-Transpondern wird dieser Identifikationscode als UID (Unique Identifier) bezeichnet. Über den eindeutigen Identifikationscode ist das Objekt O1, O2, an welchem der jeweilige Transponder 3, 4 befestigt ist, eindeutig identifizierbar und weitere vom Transponder 3, 4 übertragene Informationen sind dem jeweiligen Objekt O1, 02 eindeutig zuzuordnen.

Zudem wird auf diese Weise die Anwesenheit beider Transponder 3, 4 an der jeweiligen Position durch die Übertragung von deren Identifikationscodes an das Lesegerät 5 festgestellt. Da die drahtlose Kommunikation zwischen dem Lesegerät 5 und den Transpondern 3, 4 wesentlich schneller erfolgt als eine manuelle Bewegung des Lesegerätes 5 durch den Anwender, kann durch eine schnelle wechselseitige Kommunikation des Lesegerätes 5 mit beiden Transpondern 3, 4 sichergestellt werden, dass sich beide Transponder 3, 4 während des gesamten Lese- und/oder Schreibprozesses immer in unmittelbarer Nähe zueinander befinden bzw. befanden. Eine Manipulation ist dadurch unmöglich, da sie vom Lesegerät 5 sofort erkannt wird. Ist dies der Fall, wird vorzugsweise eine entsprechende Fehlermeldung generiert, um den Anwender zu informieren.

Alternativ oder zusätzlich wird die Sicherheit der korrekten Zuordnung der beiden Transponder 3, 4 und dadurch der beiden Objekte O1, 02, d. h. des Schildträgers und des Schildes zueinander dadurch erhöht, dass zunächst eine Authentifizierung zwischen dem Lesegerät 5 und den Transpondern 3, 4 durchgeführt wird. Die hierzu erforderlichen Zugangscodes, beispielsweise Schlüssel oder Passwörter, sind dabei jeweils wechselseitig in den Transpondern 3, 4 und im Lesegerät 5 gespeichert.

Dabei sind eine Vielzahl unterschiedlicher Zuordnungen möglich. Zum Beispiel ist der Zugangscode für den zweiten Transponder 4 im ersten Transponder 3 gespeichert, so dass zunächst vom Lesegerät 5 der erste Transponder 3 ausgelesen werden muss, um den Zugangscode für den zweiten Transponder 4 zu erhalten. Dieser wird dann vom Lesegerät 5 an den zweiten Transponder 4 übertragen, um diesen auslesen und/oder beschreiben zu können.

Dies ist eine sehr effiziente Methode, um ein unbefugtes Auslesen von Informationen des zweiten Transponders 4 und/oder ein unbefugtes Übertragen von Informationen an den zweiten Transponder 4 zu vermeiden. Zudem wird auf diese Weise sichergestellt, dass stets der richtige, an die jeweilige Transponderposition gehörende Transponder 3, 4 ausgelesen und/oder beschrieben wird. Liegt eine Manipulation an einem der Transponder 3, 4 vor, d. h. ist dieser beispielsweise gegen einen anderen ausgetauscht, so liegt entweder der Zugangscode nicht vor oder der ausgelesene Zugangscode passt nicht zu dem auszulesenden und/oder zu beschreibenden Transponder 3, 4.

In einer hier nicht dargestellten Ausführungsform umfasst zumindest einer der Transponder 3, 4 zumindest eine Sensoreinheit und/oder ist mit zumindest einer Sensoreinheit gekoppelt. D. h. der Transponder 3, 4 ist beispielsweise als ein so genannter Sensortransponder ausgebildet. Dabei kann der Transponder 3, 4 ein passiver, ein semiaktiver oder ein aktiver Transponder 3, 4 sein.

Bei einem passiven Transponder 3, 4 erfolgt eine Energieversorgung sowohl des Transponders 3, 4 als auch der Sensoreinheit über das Lesegerät 5, durch welches elektrische Energie im Transponder 3, 4 induzierbar ist. Diese ist optional beispielsweise in einem Kondensator oder Akkumulator speicherbar. Bei einem semiaktiven Transponder 3, 4 weist die Sensoreinheit eine eigene Energieversorgung für ihre Funktionen zum Beispiel in Form einer Batterie auf. Die Transpondereinheit selbst, d. h. ein Transponderinterface des Sensortransponders ist passiv, d. h. für ihre Funktion auf die beschriebene Weise vom Lesegerät 5 mit Energie zu versorgen, welche beispielsweise auch zeitweilig in einem Kondensator oder Akkumulator speicherbar ist. Bei einem aktiven Transponder 3, 4 weist der Sensortransponder zumindest eine eigene Energiequelle auf, üblicherweise in Form einer Batterie. Über diese sind sowohl die Funktionen der Sensoreinheit als auch des Transponderinterfaces des Sensortransponders mit elektrischer Energie zu versorgen.

Bei dieser Ausführungsform ist das erste Objekt 01 beispielsweise ein Messobjekt der Sensoreinheit, welches mittels des ersten, fest montierten Transponders 3 eindeutig gekennzeichnet ist. Das Messobjekt ist beispielsweise ein Elektromotor, welcher heiß werden könnte. Die Sensoreinheit ist dann zur Erfassung einer Temperatur des Elektromotors als Temperatursensoreinheit ausgebildet. Es sind natürlich, alternativ oder zusätzlich, eine Vielzahl weiterer Sensoreinheiten zur Erfassung anderer Größen möglich.

Der als Sensortransponder ausgebildete zweite Transponder 4, welcher die Sensoreinheit umfasst oder mit dieser gekoppelt ist, ist zur Erfassung von Messwerten entsprechend der oben beschriebenen Anordnung in der Nähe des ersten Transponders 3 am Messobjekt positioniert, beispielsweise in einer entsprechenden Halterung, welche als zweites Objekt 02 ausgebildet ist. Er kann jedoch auch direkt am Messobjekt, d. h. am ersten Objekt O1 befestigt sein, ohne eine zusätzliche Halterung. Sensordaten sind nur auszulesen, wenn sich der zweite Transponder 4, d. h. der Sensortransponder, an der richtigen Position in unmittelbarer Nähe zum ersten Transponder 3 befindet. Damit ist eine Manipulation verhindert oder zumindest deutlich erschwert. Die von der Sensoreinheit des Sensortransponders erfassten Sensordaten werden an das Lesegerät 5 übertragen und können in dessen Auswerteeinheit oder in einer an dieser angeschlossenen Auswerteeinheit ausgewertet werden.

Die beschriebene Lösung ist für alle üblichen RFID-Übertragungsfrequenzen verwendbar, d. h. für LF (Low Frequency), HF (High Frequency) und UHF (Ultra-High-Frequency). Auch eine Kombination von zwei dieser Frequenzbänder wäre technisch möglich, d. h. einer der Transponder 3, 4 operiert in einem der Frequenzbänder und der andere in einem anderen der Frequenzbänder. Aufgrund der unterschiedlichen Übertragungsreichweiten wäre dies aber wenig sinnvoll, da es auf diese Weise auch bei einem relativ großen Abstand der beiden Transponder 3, 4 zueinander noch möglich wäre, beide ohne Positionsänderungen des Lesegerätes 5 auszulesen.

### BEZUGSZEICHENLISTE

- 1: Sende- und Empfangsvorrichtung
- 2: Transponderanordnung
- 3: erster Transponder
- 3.1: erste Transponderantenne
- 4: zweiter Transponder
- 4.1: zweite Transponderantenne
- 5: Lesegerät
- 5.1: Lesegerätantenne

- K: drahtlose Kommunikationsverbindung
- O1: erstes Objekt
- O2: zweites Objekt

## Patentansprüche

1. Transponderanordnung (2), umfassend zumindest einen ersten Transponder (3) mit einer ersten Transponderantenne (3.1) und einen zweiten Transponder (4) mit einer zweiten Transponderantenne (4.1), wobei der erste Transponder (3) an einem ersten Objekt (O1) stoffschlüssig, formschlüssig und/oder kraftschlüssig befestigt ist, wobei der zweite Transponder (4) am ersten Objekt (O1) derart nahe zum ersten Transponder (3) angeordnet ist, dass eine drahtlose Kommunikationsverbindung (K) von einem Lesegerät (5) zu beiden Transpondern (3, 4) ohne eine Positionsänderung des Lesegerätes (5) möglich ist,
**dadurch gekennzeichnet, dass** die Transponderantennen (3.1, 4.1) der beiden Transponder (3, 4) jeweils in einer Ebene in einer oder mehreren Windungen verlaufen und koaxial zueinander ausgerichtet sind, wobei eine flächige Ausdehnung, ein Durchmesser und/oder eine Längs- und Quererstreckung einer der Transponderantennen (3.1, 4.1) 1,5-fach bis 10-fach größer ist als eine flächige Ausdehnung, ein Durchmesser und/oder eine Längs- und Quererstreckung der anderen Transponderantenne (4.1, 3.1).

2. Transponderanordnung (2) nach Anspruch 1,
**dadurch gekennzeichnet, dass** die Transponder (3, 4) als RFID-Transponder ausgebildet sind.

3. Transponderanordnung (2) nach einem der vorhergehenden Ansprüche,
**dadurch gekennzeichnet, dass** der zweite Transponder (4) an einem zweiten Objekt (02) stoffschlüssig, formschlüssig und/oder kraftschlüssig befestigt ist, welches am ersten Objekt (O1) angeordnet ist.

4. Transponderanordnung (2) nach einem der vorhergehenden Ansprüche,
**dadurch gekennzeichnet, dass** zumindest einer der Transponder (3, 4) zumindest eine Sensoreinheit umfasst und/oder mit zumindest einer Sensoreinheit gekoppelt ist.

5. Sende- und Empfangsvorrichtung (1), umfassend zumindest eine Transponderanordnung (2) nach einem der Ansprüche 1 bis 4 und zumindest ein Lesegerät (5) für eine drahtlose Kommunikation zwischen der Transponderanordnung (2) und dem Lesegerät (5).

6. Verfahren zum Betrieb einer Sende- und Empfangsvorrichtung (1) nach Anspruch 5, wobei ein Lesegerät (5) in eine Position bewegt wird, in welcher eine drahtlose Kommunikationsverbindung (K) zwischen dem Lesegerät (5) und zumindest zwei Transpondern (3, 4) der Sende- und Empfangsvorrichtung (1) möglich ist und eine drahtlose Kommunikation zwischen dem Lesegerät (5) und den beiden Transpondern (3, 4) durchgeführt wird.

7. Verfahren nach Anspruch 6,
**dadurch gekennzeichnet, dass** eine Fehlermeldung generiert wird, wenn die drahtlose Kommunikation zwischen dem Lesegerät (5) und zumindest einem der beiden Transponder (3, 4) nicht möglich ist und/oder wenn falsche Daten von zumindest einem der Transponder (3, 4) an das Lesegerät (5) übertragen werden.

8. Verfahren nach Anspruch 6 oder 7,
**dadurch gekennzeichnet, dass** die drahtlose Kommunikation zwischen dem Lesegerät (5) und den beiden Transpondern (3, 4) mittels eines Antikollisionsverfahrens durchgeführt wird.

9. Verfahren nach einem der Ansprüche 6 bis 8,
**dadurch gekennzeichnet, dass** von zumindest einem der beiden Transponder (3, 4) ein eindeutiger Identifikationscode an das Lesegerät (5) übertragen wird.

10. Verfahren nach einem der Ansprüche 6 bis 9,
**dadurch gekennzeichnet, dass** zumindest einer der Transponder (3, 4) nur ausgelesen und/oder beschrieben werden kann, wenn vom Lesegerät (5) ein Zugangscode an diesen Transponder (3, 4) übertragen wird, welcher in dem anderen Transponder (4, 3) gespeichert ist.

11. Verfahren nach einem der Ansprüche 6 bis 10,
**dadurch gekennzeichnet, dass** von zumindest einem der Transponder (3, 4), welcher zumindest eine Sensoreinheit umfasst und/oder mit zumindest einer Sensoreinheit gekoppelt ist, Sensordaten der zumindest einen Sensoreinheit an das Lesegerät (5) übertragen werden.

## Claims

1. Transponder arrangement (2) comprising at least one first transponder (3) with a first transponder antenna (3.1) and one second transponder (4) with a second transponder antenna (4.1), the first transponder (3) being fastened to a first object (01) by a material bond, in a form-fitting and/or force-fitting manner, the second transponder (4) being arranged on the first object (01) so close to the first transponder (3) that a wireless communication connection (K) from a reading device (5) to the two transponders (3, 4) is possible without changing the position of the reading device (5),
**characterized in that** the transponder antennas (3.1, 4.1) of the two transponders (3, 4) each run in a plane in one or more turns and are oriented coaxially with respect to one another, an areal extent, a diameter and/or a longitudinal and transverse extent of one of the transponder antennas (3.4, 4.1) being 1.5 to 10 times greater than an areal extent, a diameter and/or a longitudinal and transverse extent of the other transponder antenna (4.1, 3.1).

2. Transponder arrangement (2) according to Claim 1,
**characterized in that** the transponders (3, 4) are in the form of RFID transponders.

3. Transponder arrangement (2) according to one of the preceding claims,
**characterized in that** the second transponder (4) is fastened to a second object (02) by a material bond, in a form-fitting and/or force-fitting manner, which second object is arranged on the first object (01).

4. Transponder arrangement (2) according to one of the preceding claims,
**characterized in that** at least one of the transponders (3, 4) comprises at least one sensor unit and/or is coupled to at least one sensor unit.

5. Transmitting and receiving apparatus (1) comprising at least one transponder arrangement (2) according to one of Claims 1 to 4 and at least one reading device (5) for wireless communication between the transponder arrangement (2) and the reading device (5).

6. Method for operating a transmitting and receiving apparatus (1) according to Claim 5, a reading device (5) being moved into a position in which a wireless communication connection (K) between the reading device (5) and at least two transponders (3, 4) of the transmitting and receiving apparatus (1) is possible and wireless communication is carried out between the reading device (5) and the two transponders (3, 4).

7. Method according to Claim 6,
**characterized in that** an error message is generated if the wireless communication between the reading device (5) and at least one of the two transponders (3, 4) is not possible and/or if incorrect data are transmitted from at least one of the transponders (3, 4) to the reading device (5).

8. Method according to Claim 6 or 7,
**characterized in that** the wireless communication between the reading device (5) and the two transponders (3, 4) is carried out by means of an anti-collision method.

9. Method according to one of Claims 6 to 8,
**characterized in that** a unique identification code is transmitted from at least one of the two transponders (3, 4) to the reading device (5).

10. Method according to one of Claims 6 to 9,
**characterized in that** at least one of the transponders (3, 4) can only be read and/or written to if an access code which is stored in the other transponder (4, 3) is transmitted from the reading device (5) to this transponder (3, 4).

11. Method according to one of Claims 6 to 10,
**characterized in that** at least one of the transponders (3, 4) which comprises at least one sensor unit and/or is coupled to at least one sensor unit transmits sensor data from the at least one sensor unit to the reading device (5).

## Revendications

1. Arrangement de transpondeur (2), comprenant au moins un premier transpondeur (3) pourvu d'une première antenne de transpondeur (3.1) et un deuxième transpondeur (4) pourvu d'une deuxième antenne de transpondeur (4.1), le premier transpondeur (3) étant fixé à un premier objet (01) par liaison de matières, par complémentarité de formes et/ou par force, le deuxième transpondeur (4) étant disposé sur le premier objet (01) à proximité du premier transpondeur (3) de telle sorte qu'une liaison de communication sans fil (K) d'un lecteur (5) vers les deux transpondeurs (3, 4) soit possible sans une modification de la position du lecteur (5),
**caractérisé en ce que** les antennes de transpondeur (3.1, 4.1) des deux transpondeurs (3, 4) s'étendent respectivement dans un plan en une ou plusieurs spires et sont orientées de manière coaxiale l'une par rapport à l'autre, une extension à plat, un diamètre et/ou une projection longitudinale et transversale de l'une des antennes de transpondeur (3.1, 4.1) étant 1,5 à 10 fois supérieurs à une extension à plat, un diamètre et/ou une projection longitudinale et transversale de l'autre antenne de transpondeur (4.1, 3.1).

2. Arrangement de transpondeur (2) selon la revendication 1, **caractérisé en ce que** les transpondeurs (3, 4) sont réalisés sous la forme de transpondeurs RFID.

3. Arrangement de transpondeur (2) selon l'une des revendications précédentes, **caractérisé en ce que** le deuxième transpondeur (4) est fixé à un deuxième objet (02) par liaison de matières, par complémentarité de formes et/ou par force, lequel est disposé sur le premier objet (01).

4. Arrangement de transpondeur (2) selon l'une des revendications précédentes, **caractérisé en ce qu'**au moins l'un des transpondeurs (3, 4) comprend au moins une unité de détection et/ou est connecté à au moins une unité de détection.

5. Dispositif d'émission et de réception (1), comprenant au moins un arrangement de transpondeur (2) selon l'une des revendications 1 à 4 et au moins un lecteur (5) pour une communication sans fil entre l'arrangement de transpondeur (2) et le lecteur (5).

6. Procédé pour faire fonctionner un dispositif d'émission et de réception (1) selon la revendication 5, un lecteur (5) étant déplacé dans une position dans laquelle une liaison de communication sans fil (K) est possible entre le lecteur (5) et au moins deux transpondeurs (3, 4) du dispositif d'émission et de réception (1) et une communication sans fil est réalisée entre le lecteur (5) et les deux transpondeurs (3, 4).

7. Procédé selon la revendication 6, **caractérisé en ce qu'**un message d'erreur est généré lorsque la communication sans fil entre le lecteur (5) et au moins l'un des deux transpondeurs (3, 4) n'est pas possible et/ou lorsque des données erronées sont transmises au lecteur (5) par au moins l'un des deux transpondeurs (3, 4).

8. Procédé selon la revendication 6 ou 7, **caractérisé en ce que** la communication sans fil entre le lecteur (5) et les deux transpondeurs (3, 4) est réalisée au moyen d'un procédé anticollision.

9. Procédé selon l'une des revendications 6 à 8,
**caractérisé en ce qu'**un code d'identification univoque est transmis au lecteur (5) par au moins l'un des deux transpondeurs (3, 4).

10. Procédé selon l'une des revendications 6 à 9,
**caractérisé en ce qu'**au moins l'un des transpondeurs (3, 4) peut uniquement être lu et/ou décrit lorsqu'un code d'accès, qui est mémorisé dans l'autre transpondeur (4, 3), est transmis par le lecteur (5) à ce transpondeur (3, 4).

11. Procédé selon l'une des revendications 6 à 10,
**caractérisé en ce qu'**au moins l'un des transpondeurs (3, 4), lequel comprend au moins une unité de détection et/ou est connecté à au moins une unité de détection, transmet au lecteur (5) des données de capteur de l'au moins une unité de détection.
